# EUROPÄISCHE PATENTSCHRIFT

(11) **EP 3 691 777 B1**
(45) Veröffentlichungstag und Bekanntmachung des Hinweises auf die Patenterteilung: **07.06.2023**
(21) Anmeldenummer: 18782964.3
(22) Anmeldetag: 04.10.2018
(51) Int. Cl.: B01F 27/091, B01F 27/60, B01F 27/726, B01F 35/41, B01F 35/45, B01F 35/71, B01F 35/75, A22C 5/00

(54) **VORRICHTUNG ZUM BEHANDELN EINES PRODUKTES**
DEVICE FOR TREATING A PRODUCT
DISPOSITIF DE TRAITEMENT D'UN PRODUIT

(30) Priorität: 05.10.2017 DE 102017123164
(43) Veröffentlichungstag der Anmeldung: 12.08.2020
(73) Patentinhaber: Inotec GmbH Maschinenentwicklung und Vertrieb, 72770 Reutlingen (DE)
(72) Erfinder: DOMLATIL, Miroslav, 72766 Reutlingen (DE)
(74) Vertreter: Patentanwälte und Rechtsanwalt Weiß, Arat & Partner mbB
(86) Internationale Anmeldenummer: PCT/EP2018/076968
(87) Internationale Veröffentlichungsnummer: WO 2019/068793

(56) Entgegenhaltungen:
- EP-A1- 3 138 404
- DE-A1- 3 812 931
- DE-A1- 19 507 181
- DE-A1-102010 055 800
- DE-C- 56 006
- DE-C- 82 119
- FR-A- 410 319
- FR-A1- 2 870 675
- US-A- 2 784 950
- US-A- 2 957 681
- US-A- 3 722 834
- US-A- 4 509 860

## Beschreibung

Die Erfindung betrifft einen Kippmischer zum Behandeln eines Produktes in einem Aufnahmetrog, der zumindest eine Öffnung zur Aufnahme des Produktes aufweist, wobei die Behandlung des Produktes durch innere und äussere Flügel erfolgt, die in dem Aufnahmetrog angeordnet und getrennt über Antriebe antreibbar sind.

### Stand der Technik

Mischer für organische Massen, insbesondere für Fleisch, sind auf dem Markt in vielerlei Ausführungen bekannt. Sie bestehen meist aus einem zylindrischen Gehäuse mit geschlossenem Boden, in dem zentrisch eine Welle drehbar gelagert ist, die von einem Motor angetrieben wird, der aussen montiert ist. Auf der Welle befindet sich eine Haltevorrichtung für Flügel, die einerseits am Boden und andererseits an der Innenwand des Gehäuses entlangstreifen. Das Gehäuse weist ein bestimmtes Fassungsvermögen auf und ist entweder offen oder mittels eines schwenkbar daran gelagerten Riegels fest verschliessbar.

Die Flügel sind paddelförmig ausgebildet, und zwar derart, dass das Mischgut durch Drehen der Flügel miteinander vermischt wird. Das Mischgut wird insgesamt in das Gehäuse gefüllt und dann in gewünschter Weise entsprechend lange gemischt, bis alle Zugabestoffe sich mit der organischen Masse vermengt haben.

Zum Entleeren wird des Gehäuse geöffnet bzw. umgekippt, so dass das Mischgut, ähnlich wie bei einem Betonmischer, in einem bereitgestellten Auffangbehälter aufgenommen und anderen Verarbeitungsprozessen zugeführt werden kann.

Tummler sind ebenfalls auf gleicher Basis aufgebaut. Die DE 43 41 569 C2 zeigt einen zylindrischen Behälter mit mehreren Mischarmen, wobei die Mischarme einseitig gelagert sind.

Die EP 191 119 B1 zeigt auch einen zylindrischen Behälter, in dem der Mischarm einseitig gelagert ist.

Der Nachteil dieser beiden oben genannten Erfindungen ist, dass die Kippbehälter nur bedingt für eine Industrieproduktion geeignet sind, da die einseitig gelagerte Mischarme keine grosse Belastung vertragen und somit für steife Produkte ungeeignet sind.

Weiterhin gibt es seit Jahrzenten sehr viele Kippmischer auf dem Markt, die keinen zylindrischen Mischbehälter besitzen, sondern einen Mischertrog mit zwei parallel laufenden Wellen aufweisen. Eine Ausführung zeigt zwei parallel laufende Mischwellen bestückt mit Paddel. Eine zweite Ausführung besitzt auch zwei parallel laufende Mischwellen bestückt aber mit einem Z-Arm, weshalb dieser Mischer als Z-Arm Mischer bezeichnet wird.

Diese Mischer sind stabil gebaut mit beidseitig gelagerten Mischwellen. Der Antrieb erfolgt aber nur von einer Seite, und zwar dort, wo sich der Hauptmotor befindet. Der Hauptmotor treibt dann beide Mischwellen mit Kettenrädern an.

Diese Mischer haben den Nachteil, dass die Entleerung nicht optimal verläuft, wenn die Produkte verschiedene Viskositäten haben. Das liegt daran, dass die beiden Mischwellen immer die gleiche Mischgeschwindigkeit haben, die nicht verändert werden können. Weiterhin ist es nicht möglich beide Mischwellen in die gleiche Richtung zu drehen, was auch bei der Entleerung vorteilhaft wäre. Da die Kippbewegung durch einen Hydraulikzylinder geschieht, gibt es nur zwei Endlagen. Entweder ist der Trog gerade oder gekippt. Die Position in der gekippten Lage kann nicht variabel gestalten werden. Diese Mischer besitzen auch keine Abstreifer und aus dem Grunde müssen Produktreste mühsam in der gekippten Lage auskratzen werden. Weiterhin mischen diese Mischer zu langsam und nicht so schonend.

Ein in der DE 195 07 181 beschriebener Mischer ist für die Entleerung im Bereich der Stirnwand konzipiert und somit für eine Kippentleerung nicht geeignet. Den vorhandenen Mischertrog kann nur auf der langen Seite beschickt werden,, da sich die Antriebsmotoren Im Bereich der Hebekippvorrichtung befinden und so im Wege sind.

In der DE 10 2010 055 800 A1 wird eine Knetvorrichtung zum Kneten und Mischen von Teig gezeigt. Dabei sind motorisch angetriebene Wellen mit Hilfe einer Steuerung getrennt voneinander einstellbar und veränderbar. Eine erste Welle durchzieht den gesamten Knetraum und ist mit Paddeln als Werkzeuge bestückt. Die zweite Welle umgibt die erste Welle und ist ausschliesslich mit Förderknetsegmenten bestückt.

Etwas sehr ähnliches zeigt auch die US 2 957 681 A1, wobei auch hier eine innere Welle mit Aufbauten bestückt ist, die von einer äusseren Spiralwelle umfangen werden.

Die DE 56 006 C bezieht sich ebenfalls auf eine Maschine zum Kneten von Teig. Auch hier ist eine durchgehend innere Welle erkennbar, welche spiralförmig von einem inneren Flügel umgeben ist, wobei der Flügel auf der Welle sitzt. Diese Spiralwelle wird von einer äusseren Spiralwelle umkreist.

Die FR 2 870 675 zeigt einen Kippmischer mit einem kippbaren Aufnahmetrog, wobei eine Behandlung eines Produktrs durch einen inneren und äusseren Flügel erfolgt.

### Aufgabe

Der vorliegenden Erfindung liegt nun die Aufgabe zugrunde einen Kippmischer der o.g. Art aufzuzeigen, der die oben genannten Nachteile vermeidet, insbesondere besser beschickt und entleert werden kann und dessen Mischtätigkeit verbessert ist.

### Lösung der Aufgabe

Zur Lösung dieser Aufgabe führt ein Kippmischer mit den Merkmalen des Anspruchs 1.

Durch diese Anordnung wird der Hebe-/Kippvorgang nicht behindert und ist vielseitiger einsetzbar. Insbesondere ist es jetzt möglich, den Aufnahmetrog von einer Stirnseite her zu bedienen, wodurch die Bedienung erleichtert wird.

Beide Antriebe sind voneinander bevorzugt unabhängig antreibbar, was viele Varianten in der Behandlung des Produktes und eine bessere Entleerung des Behälters mit sich bringt und somit auch zeitsparend ist.

Die Antriebe sind zudem vorzugsweise noch gleichläufig oder gegenläufig antreibbar, was ebenfalls zu einer variablen Behandlung des Produktes und einer besseren Entleerung des Behälters führt, aber auch die Mischbewegung und das Mischen der Produkte an sich optimiert.

Eine Antriebswelle für den inneren Flügel durchzieht im bevorzugten Ausführungsbeispiel eine Hohlwelle für den zumindest einen äusseren Flügel. Somit sind beide Flügel unabhängig voneinander antreibbar, was zu den oben bereits genannten Vorteilen führt.

Bei einem weiteren Ausführungsbeispiel der Erfindung ist dem Aufnahmetrog ein Abstreifer zugeordnet. Dieser Abstreifer erleichtert ungemein das Entleeren des Aufnahmetroges, was den Kratzaufwand minimiert und somit eine enorme Zeitersparnis mit sich bringt.

Der Abstreifer der vorliegenden Erfindung ist beispielsweise rahmenartig ausgebildet, was bewirkt, dass der Kratzaufwand minimiert und somit die Entleerung des Behälters auch hiermit optimiert wird.

Ausserdem kann der Abstreifer mit der Hohlwelle für den äusseren Flügel verbunden sein und gewährleistet so zusätzlich eine optimale Knetung und Durchmischung der Produkte.

Die Verbindung zwischen Abstreifer und Hohlwelle kann lösbar sein, damit eine, dem Industriestandard entsprechende Reinigung der einzelnen Teile ohne Probleme erfolgen kann.

Erfindungsgemäss ist ein Kippwinkel des Aufnahmetrogs durch einen Getriebemotor veränderbar.

Das führt dazu, dass je nach Viskosität des Produktes der entsprechende Winkel eingestellt werden und eine optimale Entleerung erfolgen kann.

Der Getriebemotor ist bevorzugt auf der gleichen Seite des Aufnahmetrogs angeordnet, wie zumindest ein Antrieb für zumindest einen Flügel. Auch hier ist eine gute Übersichtlichkeit und Bedienbarkeit gewährleistet. Ausserdem steht dem Wagen und dem Aufnahmetrog nichts im Wege. Sie sind somit frei in ihrer Bewegung.

Eine Hebe-/Kippvorrichtung zur Beschickung des Aufnahmetrogs kann gegenüber den Antrieben vorgesehen sein. Durch diese Anordnung ist eine besonders einfache Beschickung möglich.

Damit werden insbesondere folgende Parameter erfüllt:
- Bessere Mischwellenausführung, um schonender und schneller zu mischen.
- Bessere Durchmischung, da die beiden Wellen unabhängig voneinander drehen und auch die Drehrichtung beliebig geändert werden kann.
- Die Kippendlage kann beliebig produktbezogen geändert werden.
- Der Mischer erhält Abstreifer, um den Kratzaufwand zu minimieren.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Frontansicht eines Kippmischers zum Behandeln eines Produktes in einem Aufnahmetrog in einer Gebrauchslage,
**Figur 2** eine Frontansicht einer Kippmischer gemäss Fig. 1 in einer weiteren Gebrauchslage,
**Figur 3** eine Seitenansicht von Teilen der Kippmischer gemäss Fig. 1,
**Figur 4** eine teilweise geschnitten dargestellte perspektivische Ansicht von Teilen der Kippmischer gemäss Fig. 1;

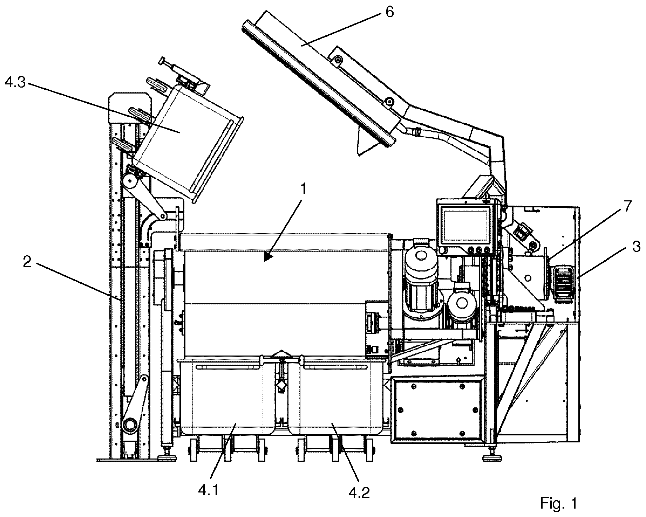

Gemäss Figur 1 weist der Kippmischer zum Behandeln von Produkten, insbesondere zum Behandeln von Fleischprodukten, einen Aufnahmetrog 1 auf, der zwischen einer Hebe-/Kippvorrichtung 2 und einem Antriebs-/Steueraggregat 3 angeordnet ist. Unterhalb des Aufnahmetrogs 1 befinden sich zwei Wagen 4.1 und 4.2 zur Aufnahme des behandelten Produktes.

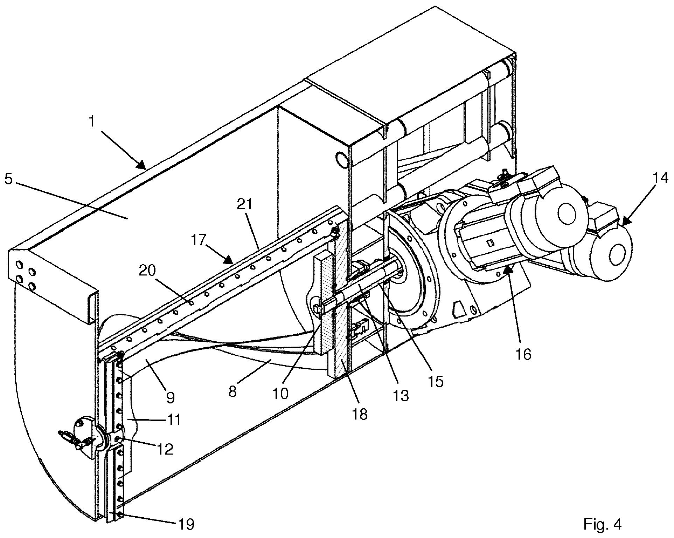

Das Produkt selbst wird über einen dritten Wagen 4.3 in den Aufnahmetrog 1 eingebracht, wobei dieser Wagen 4.3 mittels der Hebe-/Kippvorrichtung 2 angehoben und, wie in Figur 1 gezeigt, gekippt wird, so dass das Produkt durch eine Öffnung 5, siehe insbesondere Figur 4, in den Aufnahmetrog 1 fallen kann. Nach dem Einfüllen des Produktes kann der Aufnahmetrog 1 mittels eines Deckels 6 verschlossen werden.

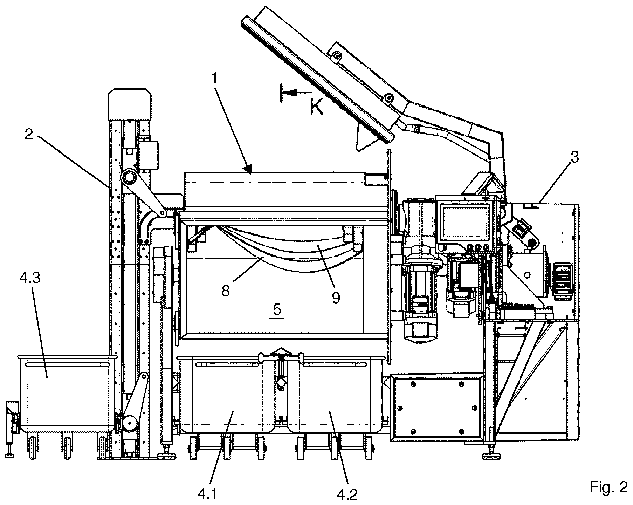

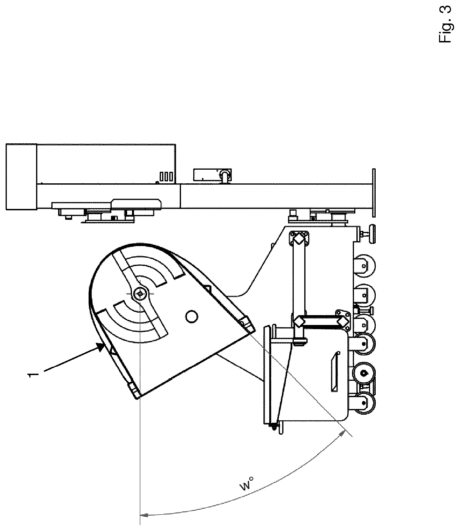

Das Antriebs -/Steueraggregat 3 beinhaltet einen Getriebemotor 7, der in etwa linear mit dem Aufnahmetrog 1 angeordnet ist. Mit diesem Getriebemotor 7 wird das Kippen des Aufnahmetrogs 1 bewirkt, wie es insbesondere in Figur 3 dargestellt ist. Dort ist allerdings der Getriebemotor 7 selbst nicht gezeigt. Der Getriebemotor 7 hat aber den entscheidenden Vorteil, dass ein Winkel w, in dessen Bereich der Aufnahmetrogs 1 gekippt werden kann, beliebig gewählt werden kann. In Figur 2 ist der Aufnahmetrog 1 in gekippter Lage erkennbar, wobei hier auch ein Einblick durch die Öffnung 5 gegeben ist, wobei ein äusserer Flügel 8 und ein innerer Flügel 9 erkennbar sind. Dies wird näher in Figur 4 verdeutlicht.

In dieser Figur 4 ist erkennbar, dass der innere Flügel 9, bevorzugt getwistet, sich zwischen einem inneren Balken 10 und einem äusseren Balken 11 erstreckt. Der äussere Balken 11 ist drehbar in einem Drehlager 12 gelagert, der innere Balken 10 ist einer Welle 13 aufgesetzt, die wiederum über ein entsprechendes, nicht näher gezeigtes Winkelgetriebe mit einem Antrieb 14, insbesondere einem Elektromotor, verbunden ist.

Die Welle 13 wiederum durchgreift eine Hohlwelle 15, welche mit einem weiteren Antrieb 16, ebenfalls bevorzugt ein Elektromotor, über ein entsprechendes Winkelgetriebe verbunden ist.

Der Hohlwelle 15 ist der äussere Flügel 8 zugeordnet, der im vorliegend gezeichneten Ausführungsbeispiel über einen Abstreifer 17 mit der Hohlwelle 15 in Verbindung steht. Dabei ist der Abstreifer 17 zumindest teilweise rahmenartig ausgebildet und weist einen inneren Stirnrahmen 18 und einen äusseren Stirnrahmen 19 auf. Beide Stirnrahmen 18 und 19 sind über eine Traverse 20 miteinander verbunden und besitzen nur teilweise gezeigte Abstreiferlippen 21.

Die Funktionsweise ist folgende:
Zum Beschicken des Aufnahmetrogs 1 wird ein mit dem Produkt gefüllter Wagen 4.3 mittels der Hebe-/Kippvorrichtung 2 über den Aufnahmetrog 1 gefahren, wobei der Deckel 6 angehoben ist. Diese Gebrauchslage wird in Figur 1 gezeigt. In dieser Gebrauchslage fällt nun das Produkt aus dem Wagen 4.3 in den Aufnahmetrog 1.

Danach erfolgt ein Behandeln des Produktes, beispielsweise ein Mischen oder Kneten. Hierzu werden die inneren und äusseren Flügel 8 bzw. 9 über die entsprechenden Antriebe 14 bzw. 16 in Gang gesetzt. Dabei können die inneren bzw. äusseren Flügel 8 bzw. 9 mit gleicher oder unterschiedlicher Geschwindigkeit, gleich-oder gegenläufig betrieben werden.

Sobald das Produkt ausreichend behandelt ist, wird der Aufnahmetrog 1 mittels des Getriebemotors 7 in eine Entleerposition gedreht, die zum Beispiel in Figur 2 angedeutet ist. Durch ein weiteres Drehen insbesondere der äusseren Flügel 8, gegebenenfalls zusammen mit dem Abstreifer 17, wird das Produkt in die Wagen 4.1 und 4.2 ausgetragen. Dabei soll betont werden, dass es denkbar ist, dass der Abstreifer 17 auch unabhängig von dem äusseren Flügel 8 betrieben werden kann, wobei für diesen Fall entsprechende Entkopplungseinrichtungen vorgesehen sind.

**Bezugszeichenliste**

| | | | | | |
|---|---|---|---|---|---|
| 1 | Aufnahmetrog | 34 | | 67 | |
| 2 | Hebe-/Kippvorichtung | 35 | | 68 | |
| 3 | Antriebs-/Steueraggregat | 36 | | 69 | |
| 4 | Wagen | 37 | | 70 | |
| 5 | Öffnung | 38 | | 71 | |
| 6 | Deckel | 39 | | 72 | |
| 7 | Getriebemotor | 40 | | 73 | |
| 8 | äusserer Flügel | 41 | | 74 | |
| 9 | innerer Flügel | 42 | | 75 | |
| 10 | innerer Balken | 43 | | 76 | |
| 11 | äusserer Balken | 44 | | 77 | |
| 12 | Drehlager | 45 | | 78 | |
| 13 | Welle | 46 | | 79 | |
| 14 | Antrieb | 47 | | | |
| 15 | Hohlwelle | 48 | | w | Winkel |
| 16 | Antrieb | 49 | | | |
| 17 | Abstreifer | 50 | | | |
| 18 | innerer Stirnrahmen | 51 | | | |
| 19 | äusserer Stirnrahmen | 52 | | | |
| 20 | Traverse | 53 | | | |
| 21 | Abstreiferlippen | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kippmischer zum Behandeln eines Produktes in einem kippbaren Aufnahmetrog (1), der zumindest eine Öffnung (5) zur Aufnahme des Produktes aufweist, wobei ein Kippwinkel (w) des Aufnahmetrogs (1) durch einen Getriebemotor (7) veränderbar ist und die Behandlung des Produktes durch einen inneren und einen äusseren Flügel (8; 9) erfolgt, die in dem Aufnahmetrog (1) angeordnet und getrennt über Antriebe (14; 16) antreibbar sind,
wobei der innere Flügel (9) sich zwischen einem inneren Balken (10) und einem äusseren Balken (11) erstreckt, wobei der äussere Balken (11) drehbar in einem Drehlager (12) gelagert und der innere Balken (10) einer Welle (13) aufgesetzt ist, die wiederum über ein Winkelgetriebe mit einem Antrieb (14) verbunden ist, wobei der Antrieb (14) für den inneren Flügel (9) auf derselben Seite des Aufnahmetrogs (1) angeordnet ist, wie der Antrieb (16) für den äusseren Flügel (8) und wobei die Welle (13) eine Hohlwelle (15) durchgreift, welche mit dem weiteren Antrieb (16) über ein entsprechendes Winkelgetriebe verbunden ist, und wobei der Hohlwelle (15) der äussere Flügel (8) zugeordnet ist.

2. Kippmischer nach Anspruch 1, **dadurch gekennzeichnet, dass** die beiden Antriebe (14; 16) voneinander unabhängig antreibbar sind.

3. Kippmischer nach Anspruch 1 oder 2, **dadurch gekennzeichnet, dass** die Antriebe (14; 16) gleichläufig oder gegenläufig antreibbar sind.

4. Kippmischer nach wenigstens einem der vorhergehenden Ansprüche, **dadurch gekennzeichnet, dass** die Welle (13) für den inneren Flügel (9) eine Hohlwelle (15) für den äusseren Flügel (8) durchzieht.

5. Kippmischer nach Anspruch 1, **dadurch gekennzeichnet, dass** in dem Aufnahmetrog (1) ein Abstreifer (17) vorgesehen ist.

6. Kippmischer nach Anspruch 5, **dadurch gekennzeichnet, dass** der Abstreifer (17) rahmenartig aus zwei Stirnrahmen (18,19) und einer diese verbindenden Traverse (20) ausgebildet ist.

7. Kippmischer nach Anspruch 6 oder 7, **dadurch gekennzeichnet, dass** der Abstreifer (17) mit der Hohlwelle (15) für den äusseren Flügel (8) verbunden ist.

8. Kippmischer nach Anspruch 7, **dadurch gekennzeichnet, dass** die Verbindung zwischen Abstreifer (17) und Hohlwelle (15) lösbar ist.

9. Kippmischer nach wenigstens einem der vorhergehenden Ansprüche, **dadurch gekennzeichnet, dass** eine Hebe-/Kippvorrichtung zur Beschickung des Aufnahmetrogs (1) gegenüber den Antrieben (14; 16) vorgesehen ist.

10. Kippmischer nach wenigstens einem der vorhergehenden Ansprüche, **dadurch gekennzeichnet, dass** der Getriebemotor (7) auf der gleichen Seite des Aufnahmetrogs (1) angeordnet ist, wie zumindest ein Antrieb (14; 16) für zumindest einen Flügel (8; 9).

## Claims

1. Tilt mixer for treating a product in a tiltable receiving trough (1) which has at least one opening (5) for receiving the product, wherein a tilting angle (w) of the receiving trough (1) is variable by means of a geared motor (7), and the handling of the product is done by an inner and an outer blade (8, 9), which are arranged in the receiving trough (1) and can be driven separately via drives (14, 16), drives (14, 16),
wherein
the inner blade (9) extends between an inner beam (10) and an outer beam (11), wherein the outer beam (11) is rotatably supported in a pivot bearing (12) and the inner beam (10) is mounted on a shaft (13), which in turn is connected via an angular gear to a drive (14), the drive (14) for the inner blade (9) being arranged on the same side of the receiving trough (1) as the drive (16) for the outer blade (8), and wherein the shaft (13) passes through a hollow shaft (15), which is connected to the further drive (16) by means of a corresponding angular gear, and wherein the hollow shaft (15) is associated with the outer blade (8).

2. Tilt mixer according to claim 1, **characterized in that** the two drives (14, 16) can be driven independently of one another.

3. Tilt mixer according to claims 1 or 2, **characterized in that** the drives (14, 16) can be driven in the same direction or in opposite directions.

4. Tilt mixer according to at least one of the preceding claims, **characterized in that** a driving shaft (13) for the inner blade (9) runs through a hollow shaft (15) for the outer blade (8).

5. Tilt mixer according to claim 1, **characterized in that** a scraper (17) is provided in the receiving trough (1).

6. Tilt mixer according to claim 5, **characterized in that** the scraper (17) is formed in the manner of a frame from two front frames (18, 19) and a traverse (20) connecting these.

7. Tilt mixer according to claims 5 or 6, **characterized in that** the scraper (17) is connected to the hollow shaft (15) for the outer blade (8).

8. Tilt mixer according to claim 7, **characterized in that** the connection between the scraper (17) and the hollow shaft (15) is detachable.

9. Tilt mixer according to at least one of the preceding claims, **characterized in that** a lifting/tilting device is provided for loading the receiving trough (1) opposite the drives (14, 16).

10. Tilt mixer according to at least one of the preceding claims, **characterized in that** the geared motor (7) is arranged on the same side of the receiving trough (1) as at least one drive (14, 16) for at least one blade (8, 9).

## Revendications

1. Mélangeur basculant pour le traitement d'un produit dans un bac de réception (1) basculant, lequel comporte au moins une ouverture (5) destinée à recevoir le produit, dans lequel un angle de basculement (w) du bac de réception (1) est modifiable par un motoréducteur (7) et le traitement du produit est effectué au moyen d'une pale interne et d'une pale externe (8 ; 9), lesquelles sont agencées dans le bac de réception (1) et lesquelles peuvent être entraînées séparément par l'intermédiaire des entraînements (14 ; 16), dans lequel la pale interne (9) s'étende entre une barre interne (10) et
une barre externe (11), dans lequel la barre externe (11) est montée rotative dans un palier rotatif (12) et la barre interne (10) est montée sur un arbre (13), lequel est relié à un entraînement (14) par l'intermédiaire d'un renvoi d'angle, dans lequel l'entraînement (14) pour la pale interne (9) est agencé du même côté du bac de réception (1) que l'entraînement (16) pour la pale externe (8) et dans lequel l'arbre (13) traverse un arbre creux (15), lequel est relié à l'autre entraînement (16) par l'intermédiaire d'un renvoi d'angle correspondant et dans lequel l'arbre creux (15) est associé à la pale externe (8).

2. Mélangeur basculant selon la revendication 1, **caractérisé en ce que** les deux entraînements (14 ; 16) peuvent être entraînés indépendamment l'un de l'autre.

3. Mélangeur basculant selon la revendication 1 ou 2, **caractérisé en ce que** les entraînements (14 ; 16) peuvent être entraînés dans le même sens ou dans des sens opposés.

4. Mélangeur basculant selon au moins l'une quelconque des revendications précédentes, **caractérisé en ce que** l'arbre (13) pour la pale interne (9) traverse un arbre creux (15) pour la pale externe (8).

5. Mélangeur basculant selon la revendication 1, **caractérisé en ce qu'**une racle (17) est située dans le bac de réception (1).

6. Mélangeur basculant selon la revendication 5, **caractérisé en ce que** la racle (17) est conçue sous la forme d'un cadre à partir de deux cadres frontaux (18, 19) et d'une traverse (20) les reliant.

7. Mélangeur basculant selon la revendication 6 ou 7, **caractérisé en ce que** la racle (17) est reliée à l'arbre creux (15) pour la pale externe (8).

8. Mélangeur basculant selon la revendication 7, **caractérisé en ce que** la liaison entre la racle (17) et l'arbre creux (15) est libérable.

9. Mélangeur basculant selon au moins l'une quelconque des revendications précédentes, **caractérisé en ce qu'**un dispositif de levage/basculement pour le chargement du bac de réception (1) est situé à l'opposé des entraînements (14 ; 16).

10. Mélangeur basculant selon au moins l'une quelconque des revendications précédentes, **caractérisé en ce que** le motoréducteur (7) est agencé du même côté du bac de réception (1) que l'au moins un entraînement (14 ; 16) pour l'au moins une pale (8 ; 9).
